# EUROPEAN PATENT APPLICATION

(11) **EP 4 819 433 A1**
(43) Date of publication of application: **07.10.2026**
(21) Application number: 25168081.5
(22) Date of filing: 02.04.2025
(51) Int. Cl.: H02J 3/40, H01F 27/34

(54) **METHOD OF OPERATING AN ELECTROLYSIS SYSTEM, CONTROL UNIT TO CONTROL AN ELECTROLYSIS SYSTEM, ELECTROLYSIS SYSTEM WITH SUCH A CONTROL UNIT, COMPUTER PROGRAM PRODUCT AND A COMPUTER-READABLE STORAGE MEDIUM**

(71) Applicant: Siemens Energy Global GmbH & Co. KG, 81739 München (DE)
(72) Inventor: Craciun, Bogdan, 91052 Erlangen (DE); Loku, Fisnik, 90439 Nürnberg (DE); Schumann, Sven, 91452 Wilhermsdorf (DE); Bendig, Marvin, 90513 Zirndorf (DE)

(57) **Abstract**

Method of operating an electrolysis system, control unit to control an electrolysis system, electrolysis system with such a control unit, computer program product and a computer-readable storage medium

Method of operating an electrolysis system (2) wherein the method comprising the step of:
(S100) providing a first control signal (CS1) to open switches of a switching unit (12) in order to disconnect the electrolysis system (2) from a grid 4, and
(S200) providing an electrical current (I0) in order to pre-magnetise a transformer (8a, 8b) of the electrolysis system (2), wherein the electrical current is provided by a DC-source (14a, 14b).

## Description

Method of operating an electrolysis system, control unit to control an electrolysis system, electrolysis system with such a control unit, computer program product and a computer-readable storage medium

The present disclosure in general relates to a method of operating an electrolysis system, a control unit to control such an electrolysis system, and an electrolysis system with such a control unit. Further, the present disclosure relates to a computer program product and a computer-readable storage medium.

Electrolysis is a process used for producing hydrogen by using electricity to split water into hydrogen and oxygen. Green hydrogen production, i.e., the production of hydrogen using renewable energy, such as electrical energy generated using wind turbines or photovoltaic systems, is increasing due to efforts to de-carbonize energy production. Therefore, the number of installed electrolysis system in the existing transmission networks continuously increases.

In order to accelerate the green hydrogen production, the electrolysis system capacity for the planned projects achieves the GW range. Electrolysis systems are usually integrated in the systems with existing renewable energy sources or connected to island grids. Both types of systems are characterized by a relatively low value of short-circuit power, which makes these systems weak and sensitive to any transient processes happening into them. It becomes a big problem considering the fact that in order to fulfil the requirements of grid operators' modern electrolysis systems should be flexible in operation and should be able to be disconnected/connected to the grid depending on different operation conditions.

One of the most severe transient processes flowing in the system is energization of transformer, which results in high inrush currents. These currents could have the amplitude 7 to 10 times the nominal current of transformer. High inrush currents could also become a reason of temporary overvoltage or undervoltage in the system, which in turn becomes a reason of different negative effects including failure of equipment and insulation aging.

The severity and amplitude of inrush currents not only depends on parameters of supplied grid, but also depends on the value of flux in transformer core, construction of the core, and exact time, when transformer is energized. Thus, it means that if all parameters above are known, it is possible to define in what exact time and order each phase should be commutated to mitigate inrush currents.

In large scale electrolyser plant being interfaced mainly by transformers and converters; the interface transformer of each array is the key element which would be first energized. Different switching schemes of transformer to mitigate the inrush currents could be considered, but this does not guarantee the stability of the feeder in a very weak grid situation.

For other applications, in the industry there are multiple solution, such as:
- soft-starter solutions,
- switching on the MV switchgear during zero crossing, and
- sequential switching of multiple transformers.

For electrolysis system applications currently, this topic has not been addressed. The main reason for this has been the fact that the size of the electrolysis systems has not been large enough to cause a critical issue with the adjacent AC system.

It is therefore an objective of the present invention to improve an electrolysis system with such a size or capacity.

This objective is solved by a method of operating an electrolysis system as stated in claim 1, a control unit to control an electrolysis system as stated in claim 6, an electrolysis system with such a control unit as stated in claim 11, a computer program product as stated in claim 12 and a computer-readable storage medium as stated in claim 13. Advantageous additional embodiments of the invention are disclosed in the respective dependent claims.

According to a first aspect of the invention, a method of operating an electrolysis system comprises the steps of:
providing a first control signal to open switches of a switching unit in order to disconnect the electrolysis system from a grid, and
providing an electrical current in order to pre-magnetise a transformer of the electrolysis system, wherein the electrical current is provided by a DC-source.

Thus, after disconnecting the electrolysis system from the grid, the transformer of the electrolysis system will be premagnetised. That mitigate inrush current of the electrolysis system.

In an embodiment of the method, the method comprising the step of:
providing a further control signal in order to run a converter/rectifier unit as converter.

The converter/rectifier unit can be an AC/DC rectifier consisting of self-commutated switching devices such as IGBTs. Thus, the converter/rectifier unit can be run as rectifier as well as converter. As a rectifier, the converter/rectifier unit converts AC to DC. As a converter, the converter/rectifier unit converts DC to AC. Moreover, when the converter/rectifier unit converts AC to DC, an electrical current flows from the grid to the rows with stacks. Further, when the converter/rectifier unit converts DC to AC, an electrical current flows in an opposite direction in order to pre-magnetise the transformer.

In an embodiment of the method, the method comprising the step of:
providing a further control signal in order to align phasors of the electrolysis system.

Thus, the phase sequence will be aligned, for example by adjusting the angles by the converter/rectifier unit.

In an embodiment of the method, a further control signal will be provided in order to connect the DC-source to the transformer by at least one a switch.

In this way, at least one switch allows the transformer to be connected or disconnected to the AC source.

In an embodiment of the method, the method comprising the step of:
providing a further control signal in order to disconnect a row of stacks of the electrolysis system from the transformer by a switching unit.

Thus, the switching unit allows to adjust the voltage provided by the DC-source above the polarization voltage.

This allows it to reach the MV voltage level which needs to be reached in order to avoid any mismatches.

According to a second aspect of the invention, an electrolysis system comprises a DC-source configured to provide an electrical current in order to pre-magnetise a transformer of the electrolysis system.

According to a third aspect of the invention, a control unit for such an electrolysis system is provided.

According to a fourth aspect of the invention, a computer program product comprises code portions that, when executed on a programmable apparatus, for example on the control unit, enable the programmable apparatus to carry out steps of a method according to the first aspect of the invention. And according to a fifth aspect of the invention, a computer readable storage medium comprises a computer program product according to the second aspect of the invention.

The programmable apparatus may be a computer or a pro-cessing control unit comprising a processor and a memory and an interface for receiving measured values and parameter settings. The computer program product corresponds to a computer program, at least including software code portions for performing steps of the method according to the invention when run on a programmable apparatus, for enabling the programmable apparatus to per-form functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features, and advantages of the invention described above, and the manner in which they are achieved, will become clearer and more clearly understood in connection with the following description of the exemplary embodiments, which are explained in more detail in connection with the drawings, wherein
Fig. 1 schematically shows a first example of an electrolysis system;
Fig. 2 schematically shows a current voltage curve of the electrolysis system shown in Fig. 1;
Fig. 3 schematically shows a second example of an electrolysis system;
Fig. 4 schematically shows a third example of an electrolysis system;
Fig. 5 schematically shows a fourth example of an electrolysis system; and
Fig. 6 schematically shows an example of a flowchart of operating the examples of the electrolysis system shown in Fig. 1 and 3 to 5.

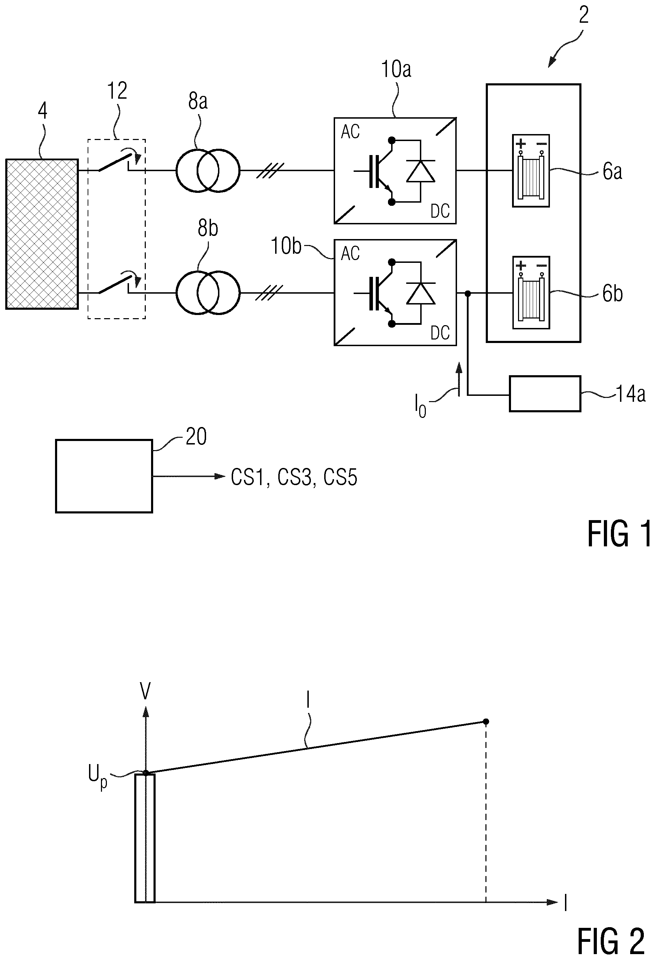

In Fig. 1, a first example of an electrolysis system 2 is schematically illustrated.

The shown electrolysis system 2 is connected to a grid 4, in the present example an AC grid.

Further, in the present example, the electrolysis system 2 has a power supply architecture and comprises two rows 6a, 6b, each of a plurality of stacks. However, the number of rows 6a, 6b may be higher.

Regarding the power supply architecture, to each row 6a, 6b a transformer 8a, 8b is assigned, having their primary sides connected to the AC grid 4, and their secondary sides connected to converter/rectifier units 10a, 10b, in the present example self-commutated switching devices, likes IGBT based, which connect with their DC output sides to the two rows 6a, 6b, each with a plurality of stacks. The electrolyser stack modules can be PEM or alkaline stack modules.

The converter/rectifier units 10a, 10b can be run as rectifier as well as converter. As rectifiers, the converter/rectifier units 10a, 10b convert AC to DC. As converters, the converter/rectifier units convert DC to AC. Moreover, when the converter/rectifier units 10a, 10b convert AC to DC, an electrical current flows from the grid to the rows with stacks. Further, when the converter/rectifier units 10a, 10b convert DC to AC, an electrical current I_{O} flows in an opposite direction in order to pre-magnetise the transformers.

In the present example the transformer 8a, 8b are three-phase MV / LV transformers.

Furthermore, in the present example, a switching unit 12 is arranged between the grid 4 and the transformer 8a, 8b, enabling the transformer 8a, 8b to be connected to or disconnected from the network 4.

Moreover, according to a first embodiment, a DC-source 14a is directly coupled to the second side of the AC /DC rectifier circuit 10b assigned to the second row 6b. Here, directly coupled means, that's there is no switch provided for connecting / disconnecting the DC-source 14a to the AC /DC rectifier circuit 10b.

Moreover, a control unit 20 provides a first control signal CS1 in order to open the switches of the switching unit 12.

Thus, the electrolysis system 2 is disconnected from the grid 4. Therefore, the rectifier transformer 8a, 8b can now considered to be in idle on its primary side. Now the DC-source 14a provides an electrical current I₀ in order to pre-magnetise the transformer 8b.

Further, the control unit 20 provides a further control signal CS3 in order to run the converter/rectifier units 10a, 10b as converters.

Moreover, the control unit 20 provides a further control signal CS5 in order to properly align phasors of electrolysis system 2.

In a similar way, a further DC-source 14b can be directly coupled to the second side of the converter/rectifier unit 10a assigned to the first row 6a. Moreover, a single DC-source 14a could be directly coupled to the second side of the converter/rectifier unit 10a assigned to the first row 6a, as well as coupled to the second side of the converter rectifier unit 10b assigned to the second row 6b. Alternatively, all converter/rectifier units 10a, 10b and assigned rows 6a, 6b could be coupled to the single DC-source 14a.

In Fig. 2, a current voltage curve I of the electrolysis system 2 is schematically shown.

The shown DC-source 14a and/or a further DC-source 14b provide a voltage below a polarization voltage U_{P} of the assigned rows 6a, 6b. Above the polarization voltage U_{P}, the electrolyser system 2 would start producing hydrogen of low quality with high amounts of foreign gas, which could lead to a hazardous situation and an unintentional flushing.

By remaining below the polarization voltage U_{P} the electrolyser system 2 would be in a safe operation. Thus, it would be possible to use the converter/rectifier unit 10a, 10b in various other ways, e.g., as converter, in a semi-grid forming manner, which would enable the converter/rectifier unit 10a, 10b to magnetise assigned transformers 8a, 8b.

However, in order to magnetise the assigned transformers 8a, 8b the switching unit 12 must be in an off position and therefore the transformers 8a, 8b are not connected to the grid 4.

The DC voltage source 14a, 14b is configured so that the converter/rectifier units 10a, 10b transformed into the grid 4 forming an inverter providing a minimum magnetisation current I₀ required by the transformers 8a, 8b in order to be magnetised.

The phase sequence of the converter/rectifier units 10a, 10b operating as a grid-forming converter must be the same as the phase sequence of the grid 4 to which the electrolysis system 2 will later be connected. Once the voltages are generated, the phasors of the two AC power systems, e.g., rows 6a, 6b, must be aligned.

If they are not aligned, the difference in angles must be adjusted by the AC/DC rectifier circuit 10a, 10b, since the angles can be adjusted in the grid formation algorithm. If the angles of the two AC power systems are equal, the switching unit 12 could be closed.

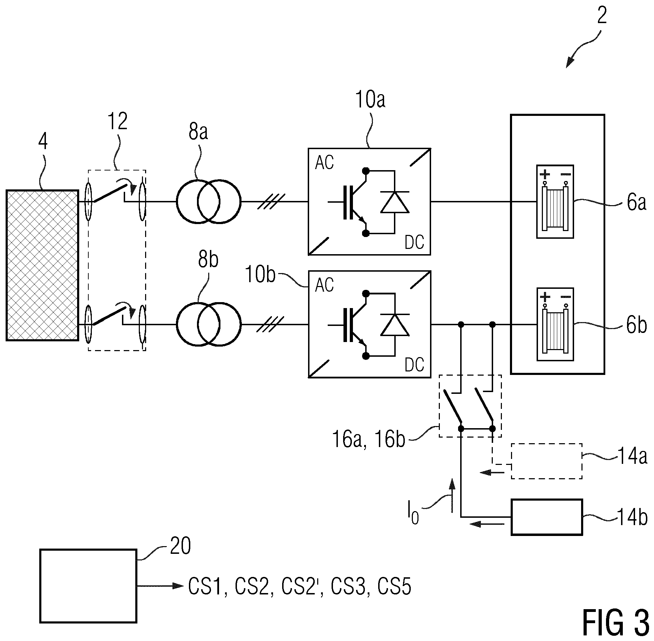

In Fig. 3, a second example of an electrolysis system 2 is schematically illustrated.

The second example differs from the first example in that to each transformer 8a, 8b and each converter/rectifier unit 10a, 10b of the rows 6a, 6b is assigned to an AC-source 14a, 14b and a switch 16a, 16b. Thus, the first switch 16a and the second switch 16b are arranged in parallel.

In this way, the first switch 16a makes it possible to connect or disconnect the transformer 8a to the first AC source 14a, and the second switch 16b makes it possible to connect or disconnect the transformer 8b to the second AC source 14b.

Moreover, the control unit 20 provides a further control signal CS2 in order to close the switch 16a and a further control signal CS2' in order to close the switch 16b.

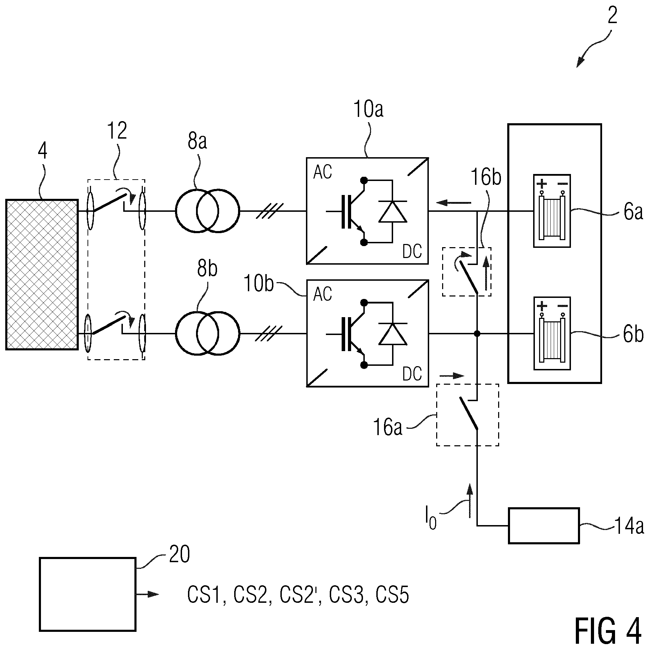

In Fig. 4, a third example of an electrolysis system 2 is schematically illustrated.

The third example differs from the second example in that the first switch 16a and the second switch 16b are arranged sequentially connecting only one single AC-source 14a.

Thus, by closing the first switch 16a the transformer 8a can be magnetised. Next, by closing the second switch 16b the transformer 8a can be magnetised.

Again, the control unit 20 provides the control signal CS2 in order to close the switch 16a and the control signal CS2' in order to close the switch 16b.

Here, back power is saved that the DC power needs, such as a battery of a UPS system (not shown).

In the third example, the first row 6a does not even need to switch the assigned AC /DC rectifier circuit 10a on, since the diode operation would be sufficient to deliver the necessary energy for the magnetisation of the transformer 8b assigned to the second row 6b. Power would be delivered to the transformer 8b assigned to the second row 6b via the second switch 16b between the two rows 6a, 6b, which can be activated once this functionality is requested.

Further, if energy is delivered to the DC input assigned to the second row 6b the same synchronization algorithm for the phase sequence could be applied as described above.

Therefore, the control unit 20 can be configured to open and close the switches 16a, 16b sequentially. That means, that in a first step the control unit 20 will provide the control signal CS2 to close switch 16a and the control signal CS2' to keep switch 16b open. Thus, the DC source 14a will pre-magnetise the coils in transformer 8b. In a next step, the control unit 20 will provide the control signal CS2 to open switch 16a and the control signal CS2' to close switch 16b. Thus, the second row 6a will pre-magnetise the coils in transformer 8a. That allows to keep the capacity of the DC-Source 14a small.

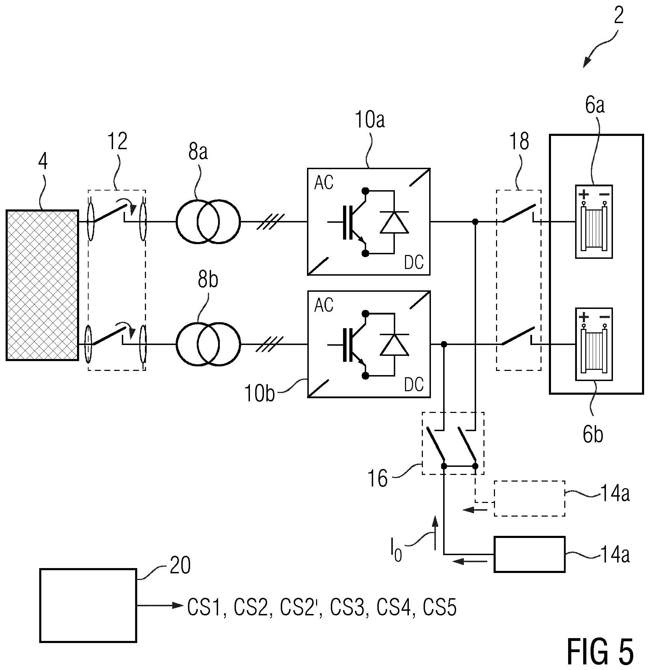

In Fig. 5, a fourth example of an electrolysis system 2 is schematically illustrated.

The fourth example differs from the second example in that a switching unit 18 is provided between the transformers 8a, 8b and the rows 6a, 6b. The switching unit 18 in the present example is configured to simultaneously connect or disconnect the rows 6a, 6b to or from the assigned transformers 8a, 8b.

Thus, the switching unit 18 allows adjusting the voltage provided by the DC-source 14a above the polarization voltage U_{P}. This allows it to reach the MV voltage level which needs to be reached in order to avoid any mismatches.

Further, the control unit 20 provides a fourth control signal CS4 in order to open switches of the switching unit 18.

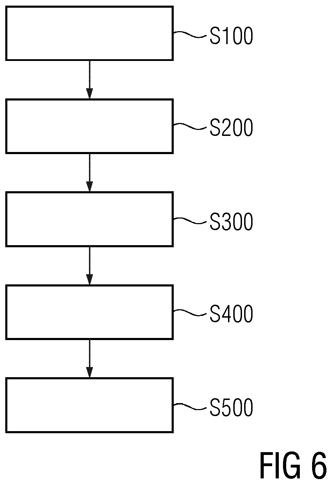

In Fig. 6, an example of a flowchart of operating the examples of the electrolysis system 2 is shown.

In a first step S100, the control unit 20 provides the first control signal CS1 in order to open the switches of the switching unit 12. Thus, the electrolysis system 2 is disconnected from the grid 4. Therefore, the transformer 8a, 8b can now considered to be idle on its primary side.

In the embodiments shown in Fig. 3 to 5, in a second step S200, the control unit 20 provides the control signal CS2 in order to connect the DC-source 14a, 14b to the transformer 8a, 8b by at least one a switch 16a, 16b via the respective rectifier/converter 10a, 10b. Thus, at least one AC-source 14a, 14b is provided accordingly on the AC-side of the rectifier/converter 10a, 10b that provides the electrical current I₀ in order to pre-magnetise the transformer 8a, 8b of the electrolysis system 2.

The DC-source 14a, 14b provides a voltage lower than the polarization voltage U_{P} of the rows 6a, 6b of stacks of the electrolysis system 2. However, it could also be possible that the DC-source 14a, 14b provides a voltage higher than the polarization voltage U_{P}.

In a further step S300, the control unit 20 provides the control signal CS3 in order to run the converter/rectifier unit 10a, 10b as converter.

Between the low-voltage side of the transformer 8a, 8b and the DC-source 14a, 14b the converter/rectifier units 10a, 10b are arranged. Thus, the electrical current I₀ passes the converter/rectifier unit 10a, 10b, in case the converter/rectifier units 10a, 10b run as converters converting DC to AC.

In a further step S400, the control unit 20 provides the control signal CS4 in order to disconnect the rows 6a, 6b of stacks of the electrolysis system 2 from the transformer 8a, 8b by a switching unit 18. That allows that the DC-source 14a, 14b provides a voltage higher than the polarization voltage U_{P}.

In a further step S500, the control unit 20 provides the control signal CS5 in order to align phasors of electrolysis system 2, for example by adjusting the phase angles by the AC /DC rectifier circuit 10a, 10b.

In a next step, by closing the switches of the switching unit 12, the electrolysis system 2 can be connected to the grid 4.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to a certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

## Claims

1. Method of operating an electrolysis system (2), wherein the method comprising the steps of:
(S100) providing a first control signal (CS1) to open switches of a switching unit (12) in order to disconnect the electrolysis system (2) from a grid 4, and
(S200) providing an electrical current (I₀) in order to pre-magnetise a transformer (8a, 8b) of the electrolysis system (2), wherein the electrical current is provided by a DC-source (14a, 14b).

2. The method as claimed in claim 1, wherein the method comprising the step of:
(S300) providing a further control signal (CS3) in order to run a converter/rectifier unit (10a, 10b) as converter.

3. The method as claimed in claim 1 or 2, wherein the method comprising the step of:
(S500) providing a further control signal (CS5) in order to align phasors of electrolysis system (2).

4. The method as claimed in claim 1, 2 or 3, wherein in step (S200) a further control signal (CS2) will be provided in order to connect the DC-source (14a, 14b) to the transformer (8a, 8b) by at least one a switch (16a, 16b).

5. The method as claimed in any of claims 1 to 4, comprising the step of:
(S400) providing a further control signal (CS4) in order to disconnect a row (6a, 6b) of stacks of the electrolysis system (2) from the transformer (8a, 8b) by a switching unit (18).

6. Control unit (20), wherein the control unit (20) is configured to provide a first control signal (CS1) to open switches of a switching unit (12) in order to disconnect the electrolysis system (2) from a grid (4).

7. Control unit (20) as claimed in claim 6, wherein the control unit (20) is configured to provide a further control signal (CS3) in order to run a converter/rectifier unit (10a, 10b) as converter.

8. Control unit (20) as claimed in claim 6 or 7, wherein the control unit (20) is configured to provide a further control signal (CS5) in order to align phasors of electrolysis system (2).

9. Control unit (20) as claimed in claim 6, 7 or 8, wherein the control unit (20) is configured to provide a further control signal (CS2) in order to connect the DC-source (14a, 14b) with to the transformer (8a, 8b) by at least one a switch (16a, 16b).

10. Control unit (20) as claimed in any of claims 6 to 9, wherein the control unit (20) is configured to provide a further control signal (CS4) in order to disconnect a row (6a, 6b) of stacks of the electrolysis system (2) from the transformer (8a, 8b) by a switching unit (18).

11. Electrolysis system (2) with a control unit (20) as claimed in any of the claims 6 to 10.

12. Computer program product, comprising code portions that, when executed on a programmable apparatus, enable the control unit (20) to carry out steps of a method according to any of the claims 1 to 5.

13. Computer readable storage medium, comprising a computer program product according to claim 12.
